# FASCICULE DE BREVET EUROPEEN

(11) **EP 2 207 281 B1**
(45) Date de publication et mention de la délivrance du brevet: **20.03.2013**
(21) Numéro de dépôt: 10150120.3
(22) Date de dépôt: 05.01.2010
(51) Int. Cl.: H04B 10/66

(54) **Procédé et équipement de traitement de signaux dans un réseau optique de communication**
Signalverarbeitungsverfahren und -vorrichtung in einem optischen Kommunikationsnetzwerk
Signal processing method and apparatus in an optical communication network

(30) Priorité: 12.01.2009 FR 0900110
(43) Date de publication de la demande: 14.07.2010
(73) Titulaire: Alcatel Lucent, 75007 Paris (FR)
(72) Inventeur: Brogard, Nicolas, 91620, NOZAY (FR); Zami, Thierry, 91620, NOZAY (FR)
(74) Mandataire: Sciaux, Edmond

(56) Documents cités:
- JP-A- 2003 092 553
- US-A1- 2006 233 555
- WEIMING MAO ET AL: "All-Optical Clock Recovery for Both RZ and NRZ Data" IEEE PHOTONICS TECHNOLOGY LETTERS, IEEE SERVICE CENTER, PISCATAWAY, NJ, US, vol. 14, no. 6, 1 juin 2002 (2002-06-01), XP011067151 ISSN: 1041-1135

## Description

La présente invention concerne le domaine des réseaux de communication optique et plus particulièrement la démodulation optique des signaux dans ces réseaux.
Afin d'accroître les performances des réseaux de communication optique, de nombreux efforts ont été réalisés récemment afin de développer des transmissions transparentes, c'est à dire, ne nécessitant ni conversion ni régénération du signal optique du noeud source jusqu'au noeud de destination. Lors de ces transmissions transparentes, le signal optique subit des dégradations dans les différents éléments du réseau. Ainsi, la qualité du signal à destination peut-être inférieure à la qualité requise, la transmission étant alors impossible. Plusieurs paramètres peuvent influencer cette dégradation et notamment le débit des signaux. En effet, un signal modulé avec un débit plus faible subira moins de dégradations. Ainsi, un des moyens pour permettre d'utiliser de façon optimale un réseau transparent est d'adapter le débit du signal transmis en fonction de la qualité du signal à destination. Néanmoins, cela nécessite l'emploi au niveau des émetteurs et des récepteurs optiques de composants adaptables à différents débits ce qui implique un gros investissement, notamment à l'échelle d'un réseau. En effet, notamment au niveau de la démodulation des signaux, le traitement de signaux ayant des formats ou des taux de modulation différents impliquent un module de récupération d'horloge adapté pour chaque format et/ou débit. Un autre example de l'art antérieur est divulgué dans JP 2003 092553.

C'est donc un objet de la présente invention de surmonter ces inconvénients précités de l'état de la technique et de fournir un procédé facile à mettre en oeuvre et peu coûteux pour adapter le débit d'un signal optique en fonction de la qualité du signal désirée à destination.

A cet effet, l'invention concerne un procédé de traitement de signaux transmis, dans un réseau de communication optique, vers un récepteur par un émetteur apte à transmettre des signaux modulés selon un type Non Retour à Zéro (NRZ) à un premier débit et selon un type Retour à Zéro (RZ) à un second débit, le premier débit étant un multiple du second débit, ledit procédé comprenant au niveau du récepteur les étapes suivantes:
- une étape de démodulation transformant un signal reçu modulé selon un type Non Retour à Zéro (NRZ) ou selon un type Retour à Zéro (RZ) en un signal binaire en utilisant un module de récupération d'horloge commun pour les deux types de modulation;
- si le type de modulation correspond à une modulation de type Retour à Zéro (RZ), une étape supplémentaire d'extraction de certains bits du signal binaire spécifique au type de modulation Retour à Zéro (RZ).

Selon un autre mode de réalisation, le premier débit est le double du second débit.

Selon un mode de réalisation additionnel, l'étape d'extraction de certains bits du signal binaire spécifique au type de modulation Retour à Zéro (RZ) correspond à une suppression d'un bit sur deux et est réalisée par un sous-échantillonnage.

Selon un autre mode de réalisation, l'étape d'extraction de certains bits du signal binaire spécifique au type de modulation Retour à Zéro (RZ) correspond à une suppression de certains bits du signal et est réalisée au niveau logiciel.

Selon un mode de réalisation supplémentaire, afin de déterminer le type de signaux reçus, on analyse le taux d'erreur de bits (BER) au niveau du décodage du correcteur d'erreur de type FEC (Forward Error Correction).

Selon un mode de réalisation additionnel, l'information correspondant au type de signaux reçus est transmise par la couche de gestion du réseau.

L'invention concerne également un programme d'ordinateur pour traiter des signaux transmis, dans un réseau de communication optique, vers un récepteur par un émetteur apte à transmettre des signaux modulés selon un type Non Retour à Zéro (NRZ) à un premier débit et selon un type Retour à Zéro (RZ) à un second débit, le premier débit étant un multiple du second débit, ledit programme d'ordinateur comprenant des instructions pour la mise en oeuvre des étapes suivantes:
- une étape de démodulation transformant un signal reçu modulé selon un type Non Retour à Zéro (NRZ) ou selon un type Retour à Zéro (RZ) en un signal binaire en utilisant un module de récupération d'horloge commun pour les deux types de modulation;
- si le type de modulation correspond à une modulation de type Retour à Zéro (RZ), une étape supplémentaire d'extraction de certains bits du signal binaire spécifique au type de modulation Retour à Zéro (RZ).

Selon un autre mode de réalisation, ledit programme d'ordinateur comprend des instructions pour la mise en oeuvre d'une étape d'analyse du taux d'erreur de bits (BER) au niveau du décodage du correcteur d'erreur de type FEC (Forward Error Correction) afin de déterminer le type de signaux reçus.

Selon un mode de réalisation supplémentaire, ledit programme d'ordinateur comprend des instructions pour la mise en oeuvre d'une étape de réception et de traitement d'une information envoyée par la couche de gestion du réseau.

La présente invention concerne également un dispositif de traitement de signaux transmis, dans un réseau de communication optique, vers un récepteur par un émetteur apte à transmettre des signaux modulés selon un type Non Retour à Zéro (NRZ) à un premier débit et selon un type Retour à Zéro (RZ) à un second débit, le premier débit étant un multiple du second débit, ledit dispositif comprenant les moyens pour:
- recevoir un signal modulé selon un type Non Retour à Zéro (NRZ) ou selon un type Retour à Zéro (RZ);
- démoduler un signal modulé reçu en un signal binaire indépendamment du type de modulation;
- extraire certains bits du signal binaire correspondant à un signal de modulation de type Retour à Zéro (RZ).

Selon un autre mode de réalisation, les moyens de démodulation transformant un signal reçu modulé selon un type Non Retour à Zéro (NRZ) ou selon un type Retour à Zéro (RZ) en un signal binaire comprennent un module de récupération d'horloge et sont communs pour les deux types de modulation.

Selon un mode de réalisation additionnel, ledit dispositif comprend des moyens de détermination d'au moins un paramètre correspondant au type de modulation du signal reçu;

Selon un mode de réalisation additionnel, les moyens de détermination d'au moins un paramètre correspondant au type de modulation du signal reçu sont des moyens d'analyse du taux d'erreur de bits (BER) au niveau du décodage du correcteur d'erreur de type FEC (Forward Error Correction).

Selon un mode de réalisation supplémentaire, les moyens de détermination d'au moins un paramètre correspondant au type de modulation du signal reçu sont des moyens de réception et de traitement d'une information envoyée par la couche de gestion du réseau.

D'autres caractéristiques et avantages de l'invention apparaîtront dans la description qui va maintenant en être faite, en référence aux dessins annexés qui en représentent, à titre indicatif mais non limitatif, un mode de réalisation possible.

Sur ces dessins:
- la figure 1 représente un schéma synoptique des différentes étapes de l'invention selon un premier mode de réalisation;
- la figure 2 représente un schéma d'un démodulateur optique;
- la figure 3 est un schéma représentant les différences entre un signal de type Retour à Zéro (RZ) et un signal de type Non Retour à Zéro (NRZ);
- la figure 4 représente la densité spectrale de trois type de signaux;
- la figure 5 représente un schéma d'un récepteur optique selon la présente invention;
- la figure 6 représente un schéma synoptique des différentes étapes de l'invention selon un deuxième mode de réalisation;

Le terme « RZ » correspond à l'acronyme Retour à Zéro;

Le terme « NRZ » correspond à l'acronyme Non Retour à Zéro;

Le terme « FEC » correspond à l'acronyme anglais Forward Error Correction.

Une idée de la présente invention est de permettre la démodulation de deux types de signaux différents à partir d'un module initialement prévu pour un seul type de signaux en ajoutant simplement un module d'extraction au circuit de démodulation initial.

Afin de réduire les dégradations physiques subies par un signal lors de sa transmission dans un réseau optique, deux solutions peuvent être envisagées.

D'une part, le format de modulation peut être modifié, en passant, par exemple, d'une modulation de type NRZ à une modulation de type RZ. Néanmoins, l'amélioration de la qualité des signaux à destination grâce à une telle modification n'est que très faible.

D'autre part, le débit des signaux peut être modifié, en passant par exemple d'un signal de type NRZ modulé à X Gb/s à un signal de type NRZ modulé à X/2 Gb/s. Dans ce cas, l'amélioration de la qualité des signaux à destination est notable mais cela requiert un module de récupération d'horloge qui s'adapte aux deux débits.

Ainsi, afin de minimiser les modifications nécessaires, au niveau du récepteur, pour démoduler des signaux à des débits différents, la présente invention repose sur l'utilisation des signaux de type NRZ modulés à X Gb/s d'une part et des signaux de type RZ modulés à X/2 Gb/s d'autre part. En effet, les caractéristiques techniques de ces deux types de signaux, qui seront présentées dans la suite de la description, permettent à l'aide de modifications minimes au niveau du récepteur de démoduler des signaux ayant des débits différents.

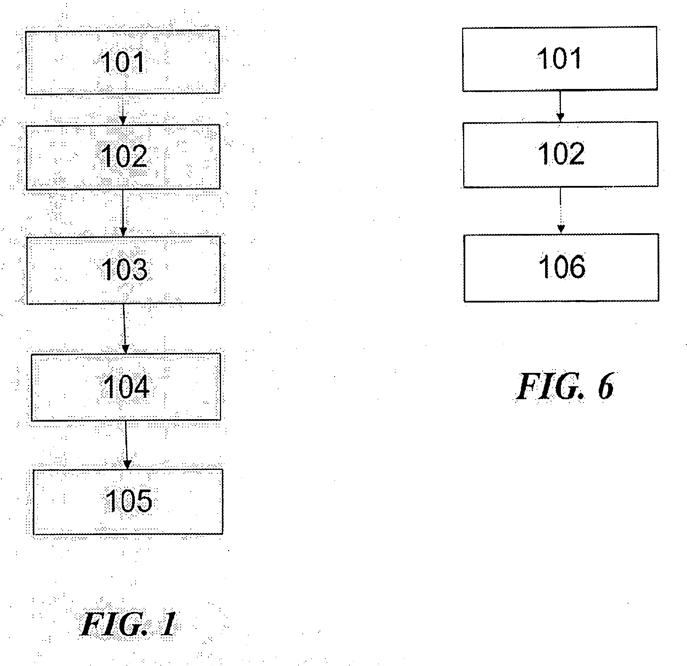

La figure 1 représente les différentes étapes du procédé selon un premier mode de réalisation de la présente invention. L'étape 101 correspond à la réception de signaux optiques. Ces signaux peuvent être de deux types, des signaux de type NRZ d'une part et des signaux de type RZ d'autre part. L'étape 102 correspond à la démodulation optique des signaux. Cette étape permet de convertir les signaux optiques en signaux électriques binaires.

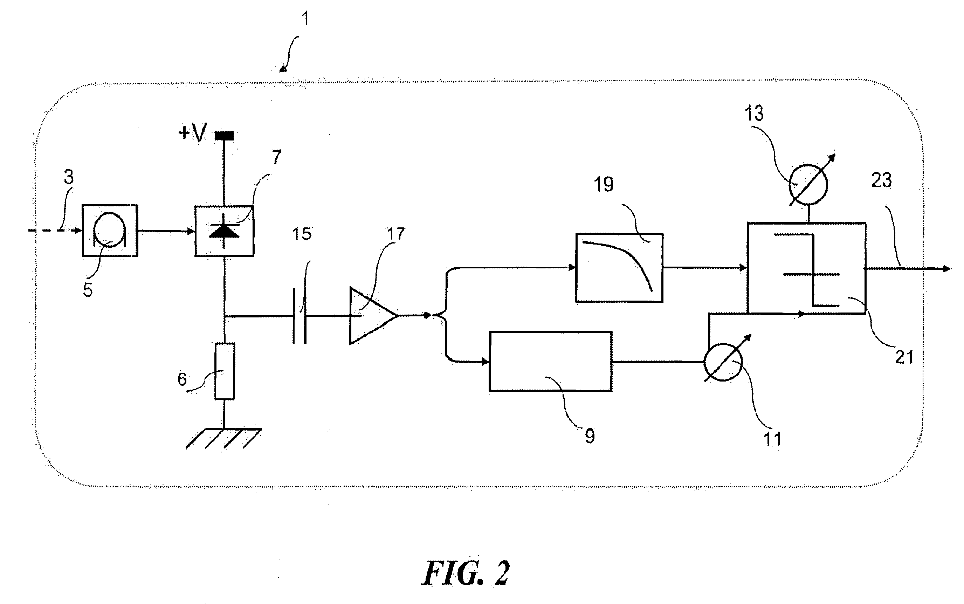

Un exemple de réalisation d'un circuit de démodulation 1 permettant cette étape (102) est représenté sur la figure 2. Le signal optique reçu 3 est envoyé sur un filtre optique 5 puis transmis à une photodiode 7. Cette dernière est reliée d'une part à la masse par une résistance de charge 6 et d'autre part à un potentiel de tension V ce qui permet la conversion du signal optique en un signal électrique. Ce dernier est transmis à un condensateur 15 puis à un amplificateur électrique 17. En sortie dudit amplificateur 17, le signal électrique est transmis d'une part à un module de récupération d'horloge 9 et d'autre part vers une voie de données. Ladite voie de données comprend, respectivement, un filtre basse-bas 19 et une bascule 21. Cette dernière convertit le signal reçu en un signal binaire 23 en fonction de la période d'horloge 11 issue du module de récupération d'horloge 9 et du seuil de bascule prédéterminé 13 permettant de définir l'état des bits transmis en fonction du niveau du signal reçu.

Néanmoins, le module de récupération d'horloge 9 doit être adapté au signal en fonction du type de modulation et du débit du signal.

Une idée de la présente invention est d'utiliser un module de récupération d'horloge commun pour deux types de signaux différents.

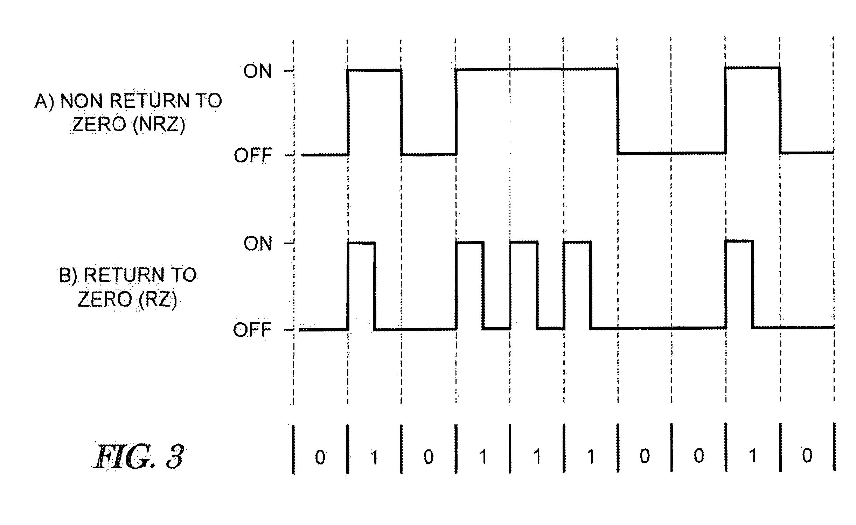

La figure 3 représente une séquence de signaux binaire codés d'une part au format NRZ et d'autre part au format RZ. On remarque que pour des signaux de fréquence équivalente, la période du signal haut est deux fois plus faible pour un signal RZ.

Ainsi, une idée de la présente invention est d'utiliser un circuit de démodulation commun pour des signaux NRZ modulés à un certain débit (X Gb/s) et des signaux RZ modulés à un débit deux fois plus faible que celui de signaux NRZ (X/2 Gb/s).

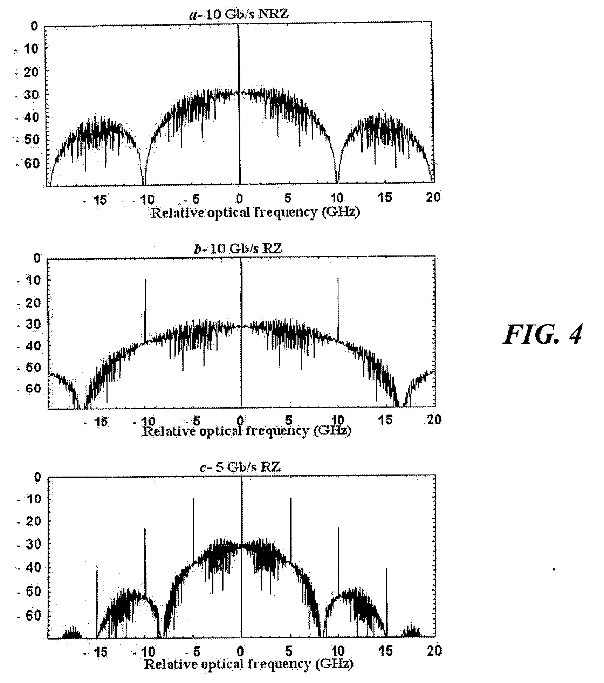

Au niveau de la densité spectrale de puissance (DSP) représentée sur la figure 4 pour différents signaux (un signal NRZ de 10 Gb/s (a), un signal RZ de 10 Gb/s (b) et un signal RZ de 5 Gb/s (c)), un signal de type RZ a une plus grande largeur spectrale qu'un signal de type NRZ ayant le même débit. De plus, cette largeur spectrale est proportionnelle au débit.

Donc, un signal NRZ à un certain débit (10 Gb/s par exemple) et un signal RZ dont le débit est la moitié du débit du signal NRZ (5Gb/s dans le présent exemple) auront la même largeur spectrale. D'autre part, pour les deux types de signaux, la raie spectrale à récupérer par le module de récupération d'horloge sera au même endroit du spectre de fréquence. En effet, pour un signal NRZ à 10 Gb/s, il n'y a pas de raie à 10 GHz dans le spectre de fréquence des signaux reçus, mais il y a une raie à 5 GHz. Au niveau du module de récupération d'horloge 9, on récupère donc la raie se trouvant à 5 GHz et on multiplie cette fréquence par deux pour obtenir le signal d'horloge 11. Par contre, pour un signal RZ à 10 Gb/s, il y a bien une raie à 10 GHz dans le spectre de fréquence. Ainsi, pour un signal NRZ à X Gb/s et signal RZ à X/2 Gb/s, il y aura une raie à X/2 GHz dans le spectre de fréquence qui permettra de récupérer la fréquence d'horloge 11.

La présente invention permet donc d'utiliser un module de démodulation commun pour deux types de signaux ayant des débits différents.

Néanmoins, le signal binaire obtenu en sortie du circuit de démodulation 1 dans le cas d'un signal RZ dont le débit est la moitié du signal NRZ comprend des bits supplémentaires par rapport au signal binaire initial (i.e. avant modulation et transmission). En effet, en utilisant le même module de récupération d'horloge 9, la démodulation crée des bits de niveau bas correspondant à la deuxième partie (niveau bas) des périodes d'un signal RZ. Le signal obtenu, en sortie du module de démodulation 1 dans le cas des signaux RZ à 5Gb/s, est un signal de 10 Gb/s dont un bit sur deux est un bit de niveau bas ajouté au signal initial lors de la démodulation (dû au sur-échantillonnage créépar le module de démodulation 1).

Ainsi, dans le cas d'un signal RZun bit sur deux doit être extrait, c'est à dire supprimé, du signal binaire afin d'obtenir le signal désiré.

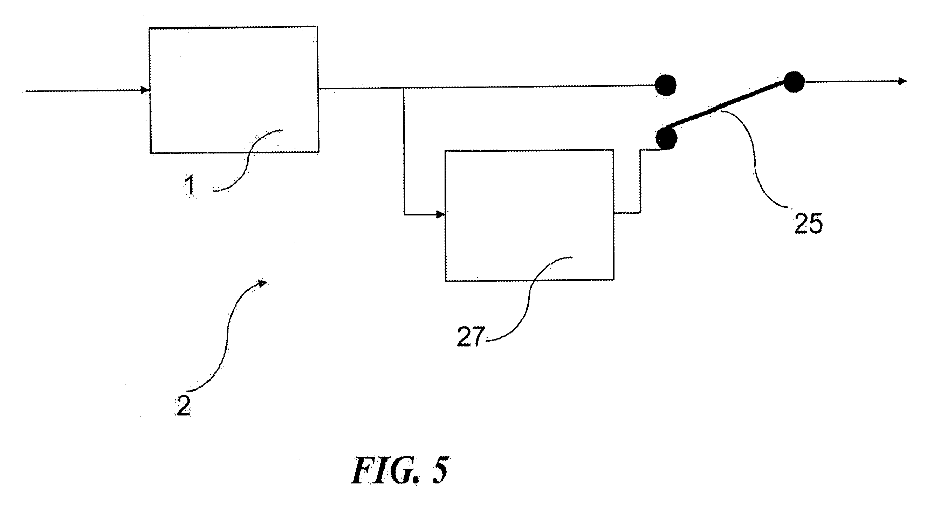

A la sortie du circuit de démodulation 1, les signaux sont transmis vers une première entrée d'un interrupteur 25 d'une part et vers un module d'extraction 27 dont la sortie est reliée à la deuxième entrée dudit interrupteur 25 d'autre part, tel que représenté sur la figure 5. Ladite figure 5 représente le dispositif de traitement des signaux 2 selon la présente invention. Le module d'extraction 27 peut être réalisé, par exemple, par un boîtier de sous-échantillonnage permettant de convertir un signal à 10 Gb/s issu d'un signal RZ à 5Gb/s en un signal à 5 Gb/s correspondant au signal initial, c'est à dire avant démodulation (ainsi en sous-échantillonnant, on élimine les bits ajoutés par le sur-échantillonnage réalisé lors de la démodulation).

L'interrupteur 25 est positionné par défaut sur l'une des deux positions (transmission directe par exemple, c'est à dire correspondant aux signaux NRZ) (étape 103).

On analyse ensuite le décodage du correcteur d'erreur de type FEC (étape 104) afin de déterminer si le positionnement de l'interrupteur 25 correspond bien au type de signaux reçus. En effet si le décodeur FEC (non représenté) est calé sur un mode de réception correspondant à un type de signaux (NRZ à 10Gb/s par exemple) alors qu'il reçoit l'autre type de signaux (RZ à 5 Gb/s dans le présent exemple), le taux d'erreur de bits (BER) mesuré sera très mauvais. L'interrupteur 25 ainsi que le décodeur FEC seront alors commutés sur l'autre mode de réception (étape 105) correspondant à l'autre type de signaux. Si le BER obtenu est largement meilleur, le type de signaux correspondant au deuxième mode de réception sera retenu. Ainsi l'interrupteur 25 sera piloté par une interface de commande reliée à un module de décodage FEC.

Selon un deuxième mode de réalisation dont les étapes sont représentées sur la figure 6 (les étapes 101 et 102 étant communes avec le premier mode de réalisation décrit précédemment), l'information correspondant au type de signaux transmis (NRZ à 10 Gb/s ou RZ à 5 Gb/s) est transmise par la couche de gestion du réseau au moment où est faite la réservation des ressources le long du chemin de transmission. Ainsi, au moment de la réception des signaux au niveau du circuit de démodulation 1, le type des signaux reçus est déjà connu et l'interrupteur 25 peut être positionné en fonction de l'information envoyée par la couche de gestion du réseau (étape 106).

Par ailleurs, les différentes étapes de l'invention, telles que décrites précédemment et pour les deux modes de réalisation, peuvent être gérées par un programme d'ordinateur.

D'autre part, dans un mode de réalisation alternatif, l'extraction des bits peut également être réalisée au niveau logiciel sur un signal numérique obtenu à partir des signaux binaires transmis en sortie du module de démodulation. Dans ce cas, pour obtenir le signal désiré, on peut soit extraire les bits utiles du signal pour les transmettre, soit extraire du signal les bits à supprimer et transmettre les bits restants.

Ainsi la présente invention permet à partir d'un dispositif de traitement de signaux de type NRZ à un certain débit, de traiter des signaux de type RZ à un débit deux fois plus faible en ajoutant simplement un module d'extraction et en pilotant un interrupteur en fonction du type de signaux reçus. Le fait de pouvoir traiter des signaux ayant des débits différents permet donc d'adapter le débit des signaux transmis en fonction de la qualité requise pour les signaux au niveau du récepteur et permettre ainsi une plus grande modularité du réseau sans avoir à modifier de façon importante les équipements dudit réseau.

## Revendications

1. Procédé de traitement de signaux transmis, dans un réseau de communication optique, vers un récepteur par un émetteur apte à transmettre des signaux modulés selon un type Non Retour à Zéro à un premier débit et selon un type Retour à Zéro à un second débit, le premier débit étant un multiple du second débit, ledit procédé comprenant au niveau du récepteur les étapes suivantes:
- une étape (102) de démodulation transformant un signal reçu modulé selon un type Non Retour à Zéro ou selon un type Retour à Zéro en un signal binaire en utilisant un module de récupération d'horloge commun pour les deux types de modulation;
- si le type de modulation correspond à une modulation de type Retour à Zéro, une étape supplémentaire de sous-échantillonnage du signal binaire spécifique au type de modulation Retour à Zéro.

2. Procédé de traitement de signaux selon la revendication 1 dans lequel le premier débit est le double du second débit.

3. Procédé de traitement de signaux selon la revendication 2 dans lequel l'étape d'extraction de certains bits du signal binaire spécifique au type de modulation Retour à Zéro correspond à une suppression d'un bit sur deux et est réalisée par un sous-échantillonnage.

4. Procédé de traitement de signaux selon la revendication 1 ou 2 dans lequel l'étape d'extraction de certains bits du signal binaire spécifique au type de modulation Retour à Zéro correspond à une suppression de certains bits du signal et est réalisée au niveau logiciel.

5. Procédé de traitement de signaux selon l'une des revendications précédentes dans lequel afin de déterminer le type de signaux reçus, on analyse le taux d'erreur de bits au niveau du décodage du correcteur d'erreur de type Forward Error Correction.

6. Procédé de traitement de signaux selon l'une des revendications 1 à 4 dans lequel l'information correspondant au type de signaux reçus est transmise par la couche de gestion du réseau.

7. Programme d'ordinateur pour traiter des signaux transmis, dans un réseau de communication optique, vers un récepteur par un émetteur apte à transmettre des signaux modulés selon un type Non Retour à Zéro à un premier débit et selon un type Retour à Zéro à un second débit, le premier débit étant un multiple du second débit, ledit programme d'ordinateur comprenant des instructions pour la mise en oeuvre des étapes suivantes:
- une étape de démodulation (102) transformant un signal reçu modulé selon un type Non Retour à Zéro ou selon un type Retour à Zéro en un signal binaire en utilisant un module de récupération d'horloge commun pour les deux types de modulation;
- si le type de modulation correspond à une modulation de type Retour à Zéro, une étape supplémentaire de sous-échantillonnage du signal binaire spécifique au type de modulation Retour à Zéro.

8. Programme d'ordinateur selon la revendication 7 comprenant des instructions pour la mise en oeuvre d'une étape d'analyse du taux d'erreur de bits au niveau du décodage du correcteur d'erreur de type Forward Error Correction afin de déterminer le type de signaux reçus.

9. Programme d'ordinateur selon la revendication 7 comprenant des instructions pour la mise en oeuvre d'une étape de réception et de traitement d'une information envoyée par la couche de gestion du réseau.

10. Dispositif de traitement de signaux transmis, dans un réseau de communication optique, vers un récepteur par un émetteur apte à transmettre des signaux modulés selon un type Non Retour à Zéro à un premier débit et selon un type Retour à Zéro à un second débit, le premier débit étant un multiple du second débit, ledit dispositif comprenant les moyens pour:
- recevoir un signal modulé selon un type Non Retour à Zéro ou selon un type Retour à Zéro;
- démoduler un signal modulé reçu en un signal binaire en utilisant un module de récupération d'horloge commun pour les deux types de modulation;
- sous-échantillonner le signal binaire correspondant à un signal de modulation de type Retour à Zéro.

11. Dispositif de traitement de signaux selon la revendication 10 dans lequel les moyens de démodulation transformant un signal reçu modulé selon un type Non Retour à Zéro ou selon un type Retour à Zéro en un signal binaire comprennent un module de récupération d'horloge (9) et sont communs pour les deux types de modulation.

12. Dispositif de traitement de signaux selon la revendication 10 ou 11 comprenant également:
- des moyens de détermination d'au moins un paramètre correspondant au type de modulation du signal reçu;

13. Dispositif de traitement de signaux selon la revendication 12 dans lequel les moyens de détermination d'au moins un paramètre correspondant au type de modulation du signal reçu sont des moyens d'analyse du taux d'erreur de bits au niveau du décodage du correcteur d'erreur de type Forward Error Correction.

14. Dispositif de traitement de signaux selon la revendication 12 dans lequel les moyens de détermination d'au moins un paramètre correspondant au type de modulation du signal reçu sont des moyens de réception et de traitement d'une information envoyée par la couche de gestion du réseau.

## Claims

1. A method for processing signals transmitted, in an optical communication network, to a receiver by a transmitter capable of transmitting signals modulated according to a Non-Return-to-Zero type at a first bitrate, and according to a Return-to-Zero type at a second bitrate, the first bitrate being a multiple of the second bitrate, said method comprising the following steps within the receiver:
- a step (102) of demodulation converting a received signal modulated according to a Non-Return-to-Zero type or according to a Return-to-Zero type into a binary signal using a clock retrieval module shared by both types of modulation;
- if the type of modulation corresponds to a Return-to-Zero modulation type, an additional step of sub-sampling the binary signal specific to the Return-to-Zero modulation type.

2. A method for processing signals according to claim 1, wherein the first bitrate is double the second bitrate.

3. A method for processing signals according to claim 2, wherein the step of extracting some bits from the binary signal specific to the Return-to-Zero modulation type corresponds to deleting one of every two bits, and is carried out by sub-sampling.

4. A method for processing signals according to claim 1 or 2, wherein the step of extracting some bits from the binary signal specific to the Return-to-Zero modulation type corresponds to deleting some bits from the signal, and is carried out in the software.

5. A method for processing signals according to one of the preceding claims, wherein in order to determine the type of signals received, the bit error rate is analyzed in the decoding of the Forward Error Correction error-correcting code.

6. A method for processing signals according to one of the claims 1 to 4, wherein the information corresponding to the type of signals received is transmitted by the network's management layer.

7. A computer program for processing the signals transmitted in an optical communication network to a receiver by a transmitter capable of transmitting signals modulated according to a Non-Return-to-Zero type at a first bitrate, and according to a Return-to-Zero type at a second bitrate, the first bitrate being a multiple of the second bitrate, said computer program comprising instructions for implementing the following steps:
- a step of demodulation (102) converting a received signal modulated according to a Non-Return-to-Zero type or according to a Return-to-Zero type into a binary signal using a clock retrieval module shared by both types of modulation;
- if the type of modulation corresponds to a Return-to-Zero modulation type, an additional step of sub-sampling the binary signal specific to the Return-to-Zero modulation type.

8. A computer program according to claim 7 comprising instructions for implementing a step of analyzing the bit error rate in the decoding of the Forward Error Correction error-correcting code, in order to determine the type of signals received.

9. A computer program according to claim 7 comprising instructions for implementing a step of receiving and processing a piece of information sent by the network's management layer.

10. A device for processing transmitted signals, in an optical communication network, to a receiver by a transmitter capable of transmitting signals modulated according to a Non-Return-to-Zero type at a first bitrate, and according to a Return-to-Zero type at a second bitrate, the first bitrate being a multiple of the second bitrate, said device comprising means for:
- receiving a signal modulated according to a Non-Return-to-Zero type or according to a Return-to-Zero type;
- demodulating a received modulated signal by using a clock retrieval module shared by both types of modulation;
- subsampling the binary signal corresponding to a Return to Zero modulation signal.

11. A signal-processing device according to claim 10, wherein the demodulation means that convert a received signal modulated according to a Non-Return-to-Zero type or according to a Return-to-Zero type into a binary signal comprise a clock retrieval module (9) and are shared by both types of modulation.

12. A signal-processing device according to claim 10 or 11, further comprising:
- means for determining at least one parameter corresponding to the received signal's modulation type;

13. A signal-processing device according to claim 12 wherein the means for determining at least one parameter corresponding to the received signal's modulation type are means of analyzing the bit error rate in the decoding of the Forward Error Correction error-correcting code

14. A signal-processing device according to claim 12 wherein the means of determining at least one parameter corresponding to the received signal's modulation type are means of receiving and processing a piece of information sent by the network's management layer.

## Patentansprüche

1. Verfahren zur Verarbeitung von Signalen, die in einem optischen Kommunikationsnetzwerk von einem Sender, der für das Übertragen von gemäß einem Non-Return-to-Zero-Code modulierten Signalen mit einer ersten Durchsatzrate und gemäß einem Return-to-Zero-Code modulierten Signalen mit einer zweiten Durchsatzrate, wobei die erste Durchsatzrate ein Vielfaches der zweiten Durchsatzrate ist, ausgelegt ist, an einen Empfänger übertragen werden, wobei das besagte Verfahren auf Ebene des Empfängers die folgenden Schritte umfasst:
- einen Schritt (102) des Demodulierens, wobei ein empfangenes, gemäß einem Non-Return-to-Zero-Code oder einem Return-to-Zero-Code moduliertes Signal unter Verwendung eines für beide Modulationsarten gemeinsamen Taktrückgewinnungsmoduls in ein binäres Signal umgewandelt wird;
- wenn die Modulationsart einer Return-to-Zero-Modulation entspricht, einen zusätzlichen Schritt des Unterabtastens des für die Return-to-Zero-Modulation spezifischen binären Signals.

2. Verfahren zur Verarbeitung von Signalen nach Anspruch 1, wobei die erste Durchsatzrate das Zweifache der zweiten Durchsatzrate beträgt.

3. Verfahren zur Verarbeitung von Signalen nach Anspruch 2, wobei der Schritt des Extrahierens bestimmter Bits aus dem für die Return-to-Zero-Modulation spezifischen binären Signal einer Entnahme jedes zweiten Bits entspricht und anhand einer Unterabtastung durchgeführt wird.

4. Verfahren zur Verarbeitung von Signalen nach Anspruch 1 oder 2, wobei der Schritt des Extrahierens bestimmter Bits aus dem für die Return-to-Zero-Modulation spezifischen binären Signal einer Entnahme bestimmter Bits des Signals entspricht und softwaremäßig durchgeführt wird.

5. Verfahren zur Verarbeitung von Signalen nach einem der vorstehenden Ansprüche, wobei man die Bitfehlerrate bei der Decodierung des Fehlerkorrektors vom Typ Vorwärtsfehlerkorrektur analysiert, um den Typ der empfangenen Signale zu ermitteln.

6. Verfahren zur Verarbeitung von Signalen nach einem der Ansprüche 1 bis 4, wobei die dem Typ der empfangenen Signale entsprechende Information durch die Netzwerkverwaltungsschicht übertragen wird.

7. Computerprogramm für die Verarbeitung von Signalen, die in einem optischen Kommunikationsnetzwerk von einem Sender, der für das Übertragen von gemäß einem Non-Return-to-Zero-Code modulierten Signalen mit einer ersten Durchsatzrate und gemäß einem Return-to-Zero-Code modulierten Signalen mit einer zweiten Durchsatzrate, wobei die erste Durchsatzrate ein Vielfaches der zweiten Durchsatzrate ist, an einen Empfänger übertragen werden, wobei das besagte Computerprogramm Befehle für das Durchführen der folgenden Schritte enthält:
- einen Schritt (102) des Demodulierens, wobei ein empfangenes, gemäß einem Non-Return-to-Zero-Code oder einem Return-to-Zero-Code moduliertes Signal unter Verwendung eines für beide Modulationsarten gemeinsamen Taktrückgewinnungsmoduls in ein binäres Signal umgewandelt wird;
- wenn die Modulationsart einer Return-to-Zero-Modulation entspricht, einen zusätzlichen Schritt des Unterabtastens des für die Return-to-Zero-Modulation spezifischen binären Signals.

8. Computerprogramm nach Anspruch 7, umfassend Befehle für die Durchführung eines Schrittes der Analyse der Bitfehlerrate bei de Decodierung des Fehlerkorrektors vom Typ Vorwärtsfehlerkorrektur, um den Typ der empfangenen Signale zu ermitteln.

9. Computerprogramm nach Anspruch 7, umfassend Befehle für die Durchführung eines Schrittes des Empfangens und Verarbeitens einer von der Netzwerkverwaltungsschicht gesendeten Information.

10. Vorrichtung zur Verarbeitung von Signalen, die in einem optischen Kommunikationsnetzwerk von einem Sender, der für das Übertragen von gemäß einem Non-Return-to-Zero-Code modulierten Signalen mit einer ersten Durchsatzrate und gemäß einem Return-to-Zero-Code modulierten Signalen mit einer zweiten Durchsatzrate, wobei die erste Durchsatzrate ein Vielfaches der zweiten Durchsatzrate ist, an einen Empfänger übertragen werden, wobei die Vorrichtung Mittel umfasst, um:
- ein gemäß einem Non-Return-to-Zero-Code oder einem Return-to-Zero-Code moduliertes Signal zu empfangen;
- eine empfangenes moduliertes Signal unter Verwendung eines für beide Modulationsarten gemeinsamen Taktrückgewinnungsmoduls in ein binäres Signal umzuwandeln;
- das einem gemäß dem Return-to-Zero-Code modulierten Signal entsprechende binäre Signal zu unterabtasten.

11. Vorrichtung zur Verarbeitung von Signalen nach Anspruch 10, wobei die Mittel zum Demodulieren, welche ein empfangenes, gemäß einem Non-Return-to-Zero-Code oder einem Return-to-Zero-Code moduliertes Signal in ein binäres Signal umwandeln, ein Taktrückgewinnungsmodul (9) umfassen und beiden Modulationsarten gemeinsam sind.

12. Vorrichtung zur Verarbeitung von Signalen nach Anspruch 10 oder 11, ebenfalls umfassend:
- Mittel zum Bestimmen mindestens eines Parameters, welcher dem Typ der Modulation des empfangenen Signals entspricht.

13. Vorrichtung zur Verarbeitung von Signalen nach Anspruch 12, wobei die Mittel zum Bestimmen mindestens eines Parameters, welcher dem Typ der Modulation des empfangenen Signals entspricht, Mittel zum Analysieren der Fehlerrate von Bits bei der Decodierung des Fehlerkorrektors vom Typ Vorwärtsfehlerkorrektur sind.

14. Vorrichtung zur Verarbeitung von Signalen nach Anspruch 12, die Mittel zum Bestimmen mindestens eines Parameters, welcher dem Typ der Modulation des empfangenen Signals entspricht, Mittel zum Empfangen und Verarbeiten einer von der Netzwerkverwaltungsschicht gesendeten Information sind.
